# EUROPEAN PATENT APPLICATION

(11) **EP 4 215 742 A1**
(43) Date of publication of application: **26.07.2023**
(21) Application number: 21868949.5
(22) Date of filing: 27.05.2021
(51) Int. Cl.: F02M 61/18, F02M 69/04

(54) **INTERNAL COMBUSTION ENGINE AND FUEL INJECTION VALVE**

(30) Priority: 17.09.2020 JP 2020156069
(71) Applicant: Hitachi Astemo, Ltd., Ibaraki 312-8503 (JP)
(72) Inventor: KANDA, Kohsuke, Hitachinaka-shi, Ibaraki 312-8503 (JP); MURAI, Atsushi, Hitachinaka-shi, Ibaraki 312-8503 (JP); NAKAMURA, Yoshitatsu, Hitachinaka-shi, Ibaraki 312-8503 (JP)
(74) Representative: Hoefer & Partner Patentanwälte mbB
(86) International application number: PCT/JP2021/020292
(87) International publication number: WO 2022/059262

(57) **Abstract**

The present invention provides an internal combustion engine and a fuel injection valve. A breakup location of a spray from the fuel injection valve that sprays fuel to an intake port located upstream of an intake valve is set upstream of the intake valve. A spray angle and a spray axis line of the fuel injection valve are set such that the spray deflected by an intake flow inside the intake port does not come into contact with a wall surface of the intake port at the breakup location. In this way, it is possible to prevent the spray of fuel from coming into contact with the wall surface of the intake port even when the intake flow deflects the spray of fuel while maintaining the spread of the spray of fuel as large as possible in the intake port.

## Description

### TECHNICAL FIELD

The present invention relates to an internal combustion engine and to a fuel injection valve.

### BACKGROUND ART

Patent Document 1 discloses a fuel injection apparatus for an internal combustion engine. According to Patent Document 1, the spray of fuel injected from a fuel injection valve installed on an intake port is set to spread more narrowly in the vertical direction than in the horizontal direction. In addition, the center of this sprayed fuel in the vertical direction injected from the fuel injection valve is set to match the center of the umbrella part of an intake valve in its closed state.

### REFERENCE DOCUMENT LIST

### PATENT DOCUMENT

Patent Document 1: JP11-141435A

### SUMMARY OF THE INVENTION

### PROBLEM TO BE SOLVED BY THE INVENTION

Whether the intake flow velocity is high or low, in order to prevent the spray of fuel injected from the fuel injection valve from coming into contact with the wall surface of the intake port, if the spray of fuel is set to spread more narrowly in the vertical direction than in the horizontal direction, a uniform premixed gas of sprayed fuel and air could not be obtained in the intake port.

If a uniform premixed gas is not obtained in the intake port, because homogeneity of the mixed gas in the cylinder is worsened, unburned fuel loss increases, knocking performance is worsened, and combustion is worsened. As a result, gasoline mileage, performance, and exhaust may be worsened.

The present invention has been made in view of these conventional circumstances, and it is an object of the present invention to provide an internal combustion engine and a fuel injection valve that can prevent the spray of fuel from coming into contact with the wall surface of an intake port even when the intake flow deflects the spray of fuel while maintaining the spread of the spray of fuel as large as possible in the intake port.

### MEANS FOR SOLVING THE PROBLEM

According to a mode of the present invention, there is provided an internal combustion engine including: a fuel injection valve that sprays fuel to an intake port located upstream of an intake valve; wherein a breakup location of the spray from the fuel injection valve is set upstream of the intake valve, and wherein a spray angle and a spray axis line of the fuel injection valve are set such that the spray deviated or deflected by an intake flow inside the intake port does not come into contact with a wall surface of the intake port at the breakup location.

In addition, according to a mode of the present invention, there is provided a fuel injection valve for spraying fuel to an intake port located upstream of an intake valve of an internal combustion engine, wherein a breakup location of the spray is set upstream of the intake valve, and a shape of a main spray that extends from an injection hole of the fuel injection valve to the breakup location is set such that a clearance that prevents the main spray from coming into contact with an inner wall of the intake port due to deflection by an intake flow is created between an outer edge of the main spray and the inner wall of the intake port.

### EFFECTS OF THE INVENTION

The above invention prevents a spray of fuel from coming into contact with the wall surface of an intake port even when the intake flow deflects the spray of fuel while maintaining the spread of the spray of fuel as large as possible in the intake port.

### BRIEF DESCRIPTION OF THE DRAWINGS

FIG. 1 schematically illustrates the structure of a port-injection-type internal combustion engine.
FIG. 2 is a longitudinal sectional view of a fuel injection valve.
FIG. 3 is an enlarged longitudinal sectional view of a tip part of the fuel injection valve.
FIG. 4 is a top view of an orifice plate having fuel injection holes.
FIG. 5 illustrates characteristics of a breakup location.
FIG. 6 schematically illustrates deflection of a main spray by an intake flow.
FIG. 7 illustrates calculation of a first angle θ1.
FIG. 8 illustrates the relationship between first angle θ1 and an outer edge of the main spray.
FIG. 9 illustrates the main spray deflected by the intake flow.
FIG. 10 illustrates a clearance that is less than the extent to which the spray is deflected.
FIG. 11 illustrates the correlation between an engine operation state and the main intake flow velocity.
FIG. 12 illustrates the correlation between the engine operation state and a lack of clearance.
FIG. 13 illustrates the correlation between the engine operation state and a requested spray velocity needed to eliminate a lack of clearance.
FIG. 14 illustrates change in first angle θ1 due to difference in spray velocity.
FIG. 15 illustrates the correlation between the fuel pressure and the spray velocity.

### MODE FOR CARRYING OUT THE INVENTION

Hereinafter, an example of the present invention will be described.

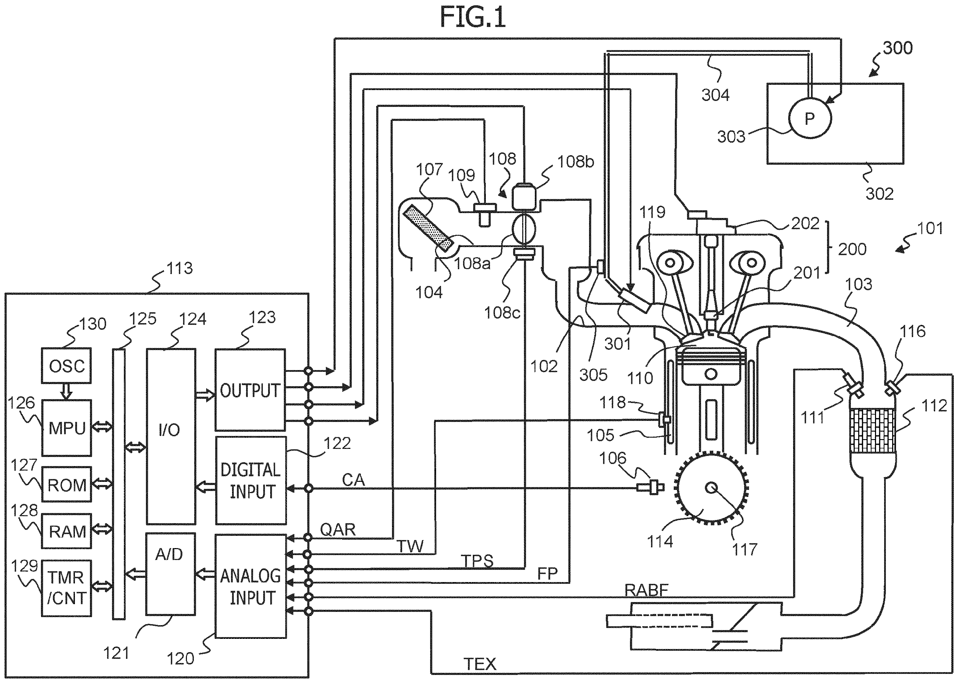

FIG. 1 illustrates a structure of a mode of an internal combustion engine 101.

Internal combustion engine 101 is a spark-ignition gasoline engine mounted as a drive source in a vehicle.

Internal combustion engine 101 includes an ignition apparatus 200 and a fuel supply apparatus 300.

Ignition apparatus 200 includes a spark plug 201 and an ignition coil 202 including a power transistor, and ignites and combusts the mixed gas in a combustion chamber 110 by performing spark ignition.

Fuel supply apparatus 300 includes: a fuel injection valve 301; a fuel tank 302; an electrically operated fuel pump 303 that supplies the fuel in fuel tank 302 to fuel injection valve 301 by using pressure; a fuel pipe 304 that connects the discharge outlet of fuel pump 303 and the fuel inlet of fuel injection valve 301; and a fuel pressure sensor 305 that measures a fuel pressure FP, which is the pressure of the fuel in fuel pipe 304.

Fuel injection valve 301 is attached to an intake port 102 located upstream of an intake valve 119, faces intake valve 119, and sprays fuel into intake port 102.

Internal combustion engine 101 is a port-injection-type internal combustion engine.

In addition, internal combustion engine 101 is capable of varying the pressure of the fuel supplied to fuel injection valve 301 by adjusting the discharge amount of fuel pump 303, that is, by adjusting the current that drives fuel pump 303.

An electronically controlled throttle 108 includes a throttle valve 108a, a throttle motor 108b, and a throttle position sensor 108c. Throttle motor 108b opens and closes throttle valve 108a.

Throttle position sensor 108c outputs a throttle position signal TPS, which indicates information about the position of throttle valve 108a.

The flow rate of the air that has flowed through an air cleaner 107 is adjusted by throttle valve 108a of electronically controlled throttle 108, and the resultant air is drawn into combustion chamber 110 via intake valve 119 along with the fuel injected from fuel injection valve 301.

A crank angle sensor 106 measures the rotation angle of a crankshaft 117. Crank angle sensor 106 detects projections of a ring gear 114 and outputs a crank angle signal CA, which is a pulse signal that rises according to redetermined rotation angle of crankshaft 117.

A flow rate detection apparatus 109 is disposed on an intake duct 104 located upstream of electrically controlled throttle 108 and outputs an intake flow rate signal QAR, which indicates information about the intake flow rate of internal combustion engine 101.

A catalytic converter 112 disposed in an exhaust pipe 103 of internal combustion engine 101 cleans the exhaust of internal combustion engine 101 by using an internal three-way catalyst.

An air-fuel ratio sensor 111 is disposed at exhaust pipe 103 located upstream of catalytic converter 112, and outputs an air-fuel ratio signal RABF, which indicates information about the exhaust-fuel ratio based on the concentration of oxygen in the exhaust.

In addition, an exhaust temperature sensor 116 is disposed at exhaust pipe 103 located upstream of catalytic converter 112, and outputs an exhaust temperature signal TEX, which indicates information about the exhaust temperature [°C] at the front of catalytic converter 112.

A water temperature sensor 118 outputs a cooling water temperature signal TW, which indicates information about the temperature [°C] of the cooling water in a cooling water jacket 105 of internal combustion engine 101.

An engine control apparatus 113 is an electronic control apparatus including a microcomputer, which includes a microprocessor unit (MPU)126, a read-only memory (ROM) 127, and a random access memory (RAM) 128.

Engine control apparatus 113 acquires signals relating to the operation state of internal combustion engine 101, such as throttle position signal TPS, intake flow rate signal QAR, crank angle signal CA, air-fuel ratio signal RABF, exhaust temperature signal TEX, cooling water temperature signal TW, and fuel pressure signal FP.

Engine control apparatus 113 calculates various operation amounts based on the acquired signals, and controls the operation of internal combustion engine 101 by outputting the calculated operation amounts to ignition coil 202, fuel injection valve 301, throttle motor 108b, and fuel pump 303, etc.

Engine control apparatus 113 has a function as a fuel pressure control unit that is capable of varying the pressure of the fuel supplied to fuel injection valve 301 by controlling fuel pump 303. In addition, engine control apparatus 113 and fuel pump 303 constitute a fuel pressure control apparatus that is capable of varying the pressure of the fuel supplied to fuel injection valve 301.

Engine control apparatus 113 includes an analog input circuit 120, an A/D conversion circuit 121, a digital input circuit 122, an output circuit 123, and an I/O circuit 124, so as to acquire sensor signals and to output operation amounts to its control targets.

Analog input circuit 120 acquires analog signals such as intake flow rate signal QAR, throttle position signal TPS, air-fuel ratio signal RABF, exhaust temperature signal TEX, cooling water temperature signal TW, and fuel pressure signal FP.

These analog signals acquired by analog input circuit 120 are converted by A/D conversion circuit 121 into digital signals, which are next output to a bus 125.

In addition, a digital signal such as crank angle signal CA acquired by digital input circuit 122 is output to bus 125 via I/O circuit 124.

Bus 125 is connected to MPU 126, ROM 127, RAM 128, a timer and counter (TMR/CNT) 129, etc.

MPU 126, ROM 127, and RAM 128 exchange data with each other via bus 125.

MPU 126 receives a clock signal from a clock generator 130 and performs various kinds of calculations and processing in synchronization with the clock signal.

ROM 127 is, for example, an electrically erasable programmable read-only memory (EEPROM) in which data is erasable and rewritable, and stores a program, setting data, and initial values, etc., for operating engine control apparatus 113.

RAM 128 and MPU 126 acquire information stored in ROM 127 via bus 125.

MPU 126 uses RAM 128 as a work area for temporarily storing calculation results and processing results.

Timer and counter 129 is used for measuring time or the number of times an operation is performed, for example.

The operation amount signals such as an ignition control signal, an air-fuel ratio control signal (in other words, a fuel injection control signal), and a fuel pressure control signal calculated by MPU 126 are output to bus 125 and are next supplied to ignition coil 202, fuel injection valve 301, fuel pump 303, etc., from output circuit 123 via I/O circuit 124.

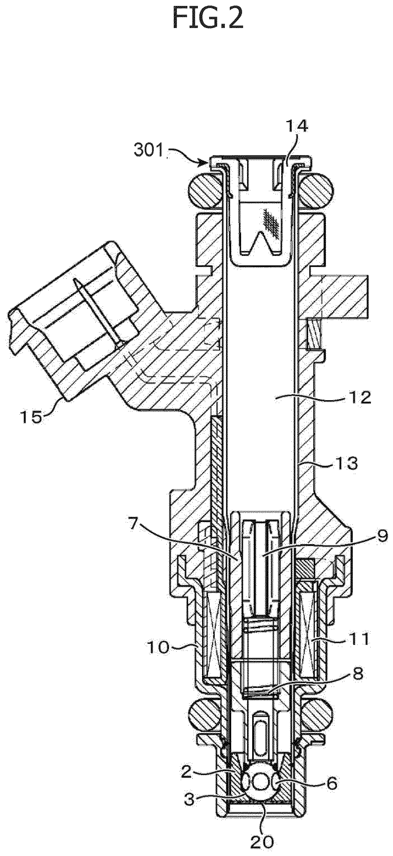

FIGS. 2 to 4 illustrate a mode of the structure of fuel injection valve 301.

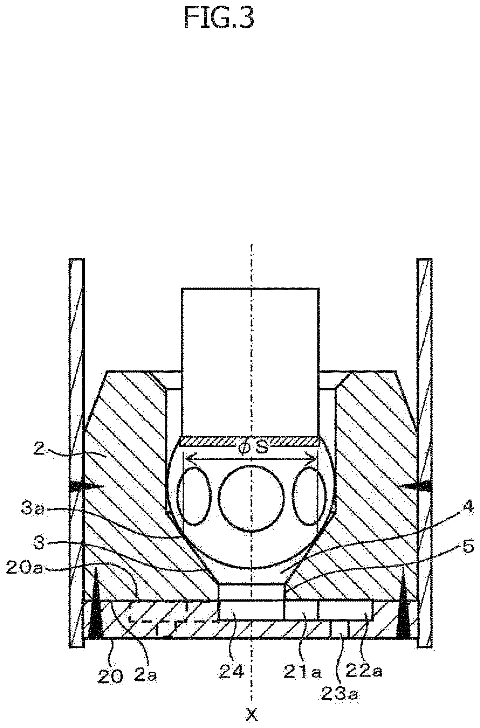

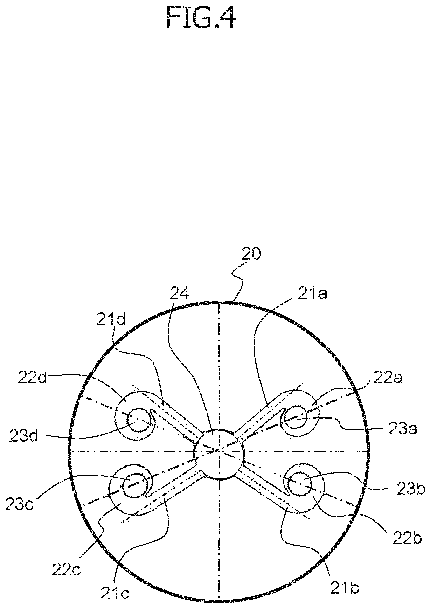

FIG. 2 is a longitudinal sectional view of an overall structure of fuel injection valve 301. FIG. 3 is an enlarged sectional view of a tip part of fuel injection valve 301. FIG. 4 is a top view of an orifice plate 20 of fuel injection valve 301.

Fuel injection valve 301 includes a pipe 13 storing a nozzle body 2 and a valve body 6. Valve body 6 is moved up and down by an electromagnetic coil 11.

Fuel injection valve 301 includes: a magnetic yoke 10 that surrounds electromagnetic coil 11; a core 7 located in the center of electromagnetic coil 11; valve body 6; a valve seat 3 on which valve body 6 is seated; a fuel injection chamber 4 into which the fuel that has flowed through the gap between valve body 6 and valve seat 3 flows; and orifice plate 20 disposed downstream of fuel injection chamber 4.

Orifice plate 20 includes a plurality of injection holes 23a to 23d.

In addition, a spring 8 that presses valve body 6 against valve seat 3 is installed in the center of core 7.

The elastic force of spring 8 is adjusted by a spring adjuster 9.

When electromagnetic coil 11 is not energized, valve body 6 is seated on valve seat 3 by the elastic force of spring 8, and fuel injection valve 301 remains closed.

In this closed state, no fuel is injected from injection holes 23a to 23d.

However, when electromagnetic coil 11 is energized, valve body 6 is moved to come into contact with core 7 by the electromagnetic force generated by electromagnetic coil 11, and fuel injection valve 301 is opened.

In this open state, a gap is created between valve body 6 and valve seating surface 3, a fuel passage is opened, and fuel is injected from injection holes 23a to 23d.

A fuel inlet part of fuel injection valve 301 includes a fuel passage 12 including a filter 14.

The fuel supplied from fuel pump 303 by pressure flows into fuel injection valve 301 through filter 14 and is injected to the outside from injection holes 23a to 23d.

In addition, the exterior of fuel injection valve 301 is covered by molded resin 15.

Next, a mode of the structure of nozzle body 2 will be described in detail with reference to FIG. 3.

A top surface 20a of orifice plate 20 is into contact with a bottom surface 2a of nozzle body 2, and the outer periphery of this contact part is welded by laser such that orifice plate 20 is fixed to nozzle body 2.

Valve seat 3 is formed to have a conical shape at the lower end part of nozzle body 2, and a fuel introduction hole 5 having a diameter less than a diameter ϕS of a seat part 3a of valve seat 3 is also formed at the lower end part of nozzle body 2. The center line of valve seat 3 and the center line of fuel introduction hole 5 match the center X of the core of the valve.

In addition, fuel introduction hole 5 located at bottom surface 2a of nozzle body 2 forms an opening that communicates with a center chamber 24 of orifice plate 20.

Next, the structure of orifice plate 20 will be described in detail.

Center chamber 24 is formed as a concave part in top surface 20a of orifice plate 20.

Four passages 21a to 21d are connected to center chamber 24.

Passages 21a to 21d are disposed at equal intervals in a circumferential direction of center chamber 24 and extend radially toward the outer circumference of orifice plate 20.

The downstream end of passage 21a communicates with a spiral chamber 22a, and the downstream end of passage 21b communicates with a spiral chamber 22b. In addition, the downstream end of passage 21c communicates with a spiral chamber 22c, and the downstream end of passage 21d communicates with a spiral chamber 22d.

Spiral chambers 22a to 22d have walls of which the curvature gradually increases from upstream to downstream. That is, spiral chambers 22a to 22d each form a spiral fuel passage that gradually reaches its center as it extends from upstream to downstream.

Injection holes 23a to 23d are each formed in the center of the corresponding one of spiral chambers 22a to 22d (in other words, swirl generation chambers).

That is, fuel injection valve 301 includes a plurality of combinations of injection holes and spiral chambers (23a and 22a, 23b and 22b, 23c and 22c, and 23d and 22d).

Although the present description assumes that fuel injection valve 301 includes four combinations of injection holes (23a to 23d) and spiral chambers (22a to 22d), fuel injection valve 301 may include three combinations or five or more combinations of injection holes and spiral chambers.

With fuel injection valve 301, the spray of fuel injected from injection holes 23a to 23d via spiral chambers 22a to 22d formed in orifice plate 20 forms a spiral flow, and atomization of the fuel is facilitated.

That is, spiral chambers 22a to 22d (and passages 21a to 21d and injection holes 23a to 23d) formed in orifice plate 20 function as a mechanism of facilitating atomization of the spray of fuel injected by fuel injection valve 301.

The atomization facilitation mechanism of fuel injection valve 301 is not limited to the mechanism including spiral chambers 22a to 22d that convert the spray of fuel into a spiral flow.

A suitable atomization facilitation mechanism may be adopted for fuel injection valve 301. Examples of the mechanism include a mechanism of bombarding the spray of fuel with an air flow, a mechanism in which a spiral groove is formed in the valve body, and a mechanism of heating the fuel before the fuel is injected from the injection holes.

Next, settings of injection characteristics such as the spray angle and the spray axis line of fuel injection valve 301 will be described.

Fuel injection valve 301 injects a spray of fuel in a conical shape. However, as the directionality of the spray of fuel particles weakens, this neat conical shape formed immediately after fuel injection valve 301 begins to deform. The location where this neat conical shape begins to deform is referred to as a breakup location Ls. The penetration of the spray of fuel particles is set such that breakup location Ls is located upstream of intake valve 119.

Breakup location Ls is defined by the distance [mm] from the injection holes of fuel injection valve 301 (the tip part of fuel injection valve 301).

Thus, setting breakup location Ls at a location upstream of intake valve 119 indicates that the distance between the injection holes of fuel injection valve 301 and intake valve 119 is less than the distance between the injection holes of fuel injection valve 301 and breakup location Ls.

In addition, breakup location Ls can be defined by the velocity of the spray of fuel particles when fuel injection valve 301 sprays the fuel downward in the direction of gravitational force. For example, breakup location Ls can be defined at a location (distance) where the velocity of the spray of fuel particles reaches 8 m/s or less.

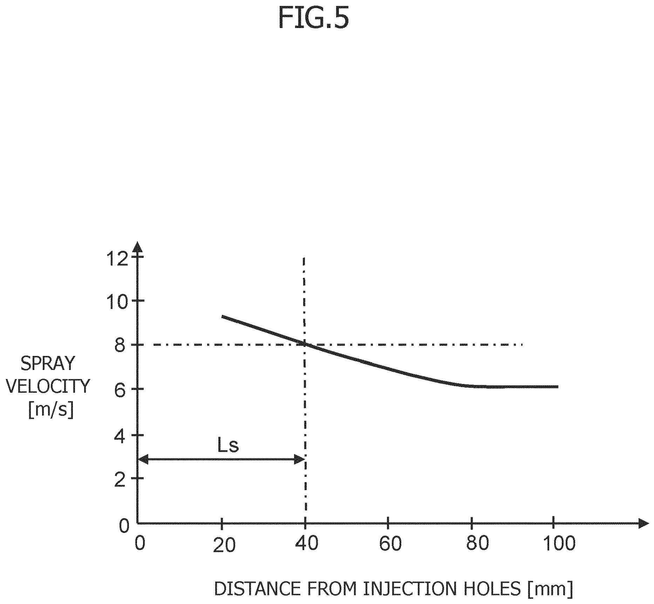

FIG. 5 illustrates the correlation between the distance from the injection holes of fuel injection valve 301 and the spray velocity.

When the distance from the injection holes of fuel injection valve 301 is about 40 mm, the velocity of the spray of fuel particles is 8 m/s or less, and therefore, breakup location Ls is 40 mm away from the injection holes.

Fuel injection valve 301 of which breakup location Ls is set in this way is attached to intake port 102 such that the distance from the injection holes to the umbrella part of intake valve 119 is greater than 40 mm.

In other words, the penetration of the spray of fuel injected from fuel injection valve 301 is set such that the penetration weakens before the umbrella part of intake valve 119 and such that the shape of the spray of fuel begins to collapse before the spray reaches intake valve 119.

By setting breakup location Ls of the spray of fuel injected from fuel injection valve 301 at a location upstream of intake valve 119, in intake port 102 downstream of breakup location Ls, it is possible to widely spread the spray of fuel inside intake port 102 while preventing the fuel from adhering to the wall surface of intake port 102. As a result, a uniform premixed gas of sprayed fuel and air can be obtained inside intake port 102.

By spreading the main spray that extends from the injection holes of fuel injection valve 301 to breakup location Ls as widely as possible, the spray of fuel can be widely spread inside intake port 102.

However, if the intake flow increases, because the main spray is deflected by the intake flow (in other words, the intake flow velocity), the main spray may come into contact with the wall surface of the intake port.

Thus, the spray angle and the spray axis line of fuel injection valve 301 are set such that the main spray deflected by the intake flow inside intake port 102 does not come into contact with the wall surface of intake port 102 at breakup location Ls.

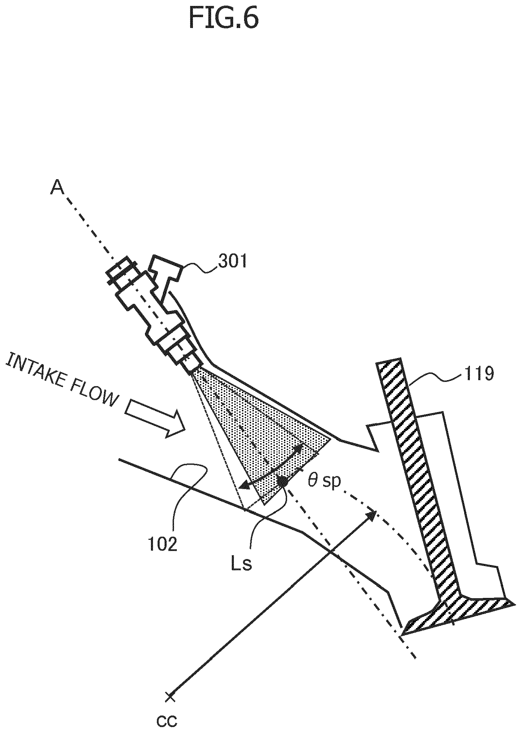

FIG. 6 schematically illustrates deflection of the main spray by the intake flow. A dotted line represents the main spray when there is no intake flow, and a solid line represents the main spray that has been deflected by the intake flow.

Although FIG. 6 illustrates the intake flow that changes the direction of the main spray without changing the shape of the main spray, in reality the intake flow also changes the shape of the main spray from a neat conical shape to a deformed shape.

An axis line A (in other words, the mounting angle of fuel injection valve 301) and a spray angle θsp of fuel injection valve 301 are set such that, whether there is the intake flow or not, the outer edge of the main spray does not come into contact with the wall surface of intake port 102.

That is, axis line A and spray angle θsp of fuel injection valve 301 are set such that the outer edge of the main spray does not come into contact with the wall surface of intake port 102 when there is no intake flow and such that, between the main spray and a wall surface of intake port 102, the wall being located in a direction in which the main spray is deflected by the intake flow, a clearance based on the extent to which the main spray is deflected is created in advance.

In other words, the shape of the main spray is set such that a clearance that prevents the main spray that extends from the injection holes of fuel injection valve 301 to breakup location Ls from coming into contact with the inner wall of intake port 102 due to deflection by the intake flow is created between the outer edge of the main spray and the inner wall of intake port 102.

If the intake flow increases (in other words, if the intake flow velocity increases), the main spray of fuel injection valve 301 is deflected in a direction farther away from the center of curvature CC of intake port 102.

Thus, to set the above clearance, fuel injection valve 301 is attached to a wall surface of intake port 102, the wall surface being far from the center of curvature CC of intake port 102, such that axis line A is directed to the center of curvature CC, rather than the center of the umbrella part of intake valve 119.

Hereinafter, the settings of axis line A and spray angle θsp of fuel injection valve 301 will be described in more detail.

When axis line A and spray angle θsp of fuel injection valve 301 are set, first angle θ1, which is the extent to which the main spray is deflected by the intake flow, is first calculated.

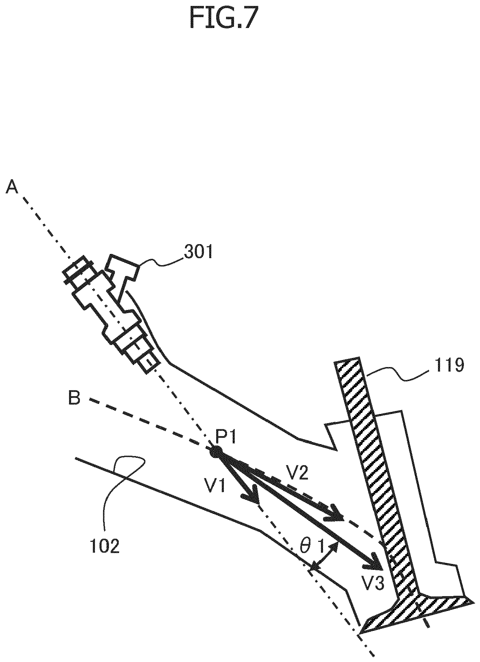

FIG. 7 illustrates the setting of first angle θ1.

The following description assumes that the main stream line of the intake flow flowing inside intake port 102 is denoted by B and the intersection point of main stream line B and axis line A (in other words, the axis line of fuel injection valve 301) is denoted by P1.

Next, assuming that the velocity vector of the spray at intersection point P1 is V1 and that the velocity vector of the intake flow at intersection point P1 in a high-rotation and high-load region of internal combustion engine 101 (in other words, under the conditions in which the main spray is deflected by the intake flow) is V2, a velocity vector V3, which is a resultant vector of velocity vector V1 and velocity vector V2, is calculated.

Next, the angle formed by velocity vector V1 and velocity vector V3 is calculated as first angle θ1.

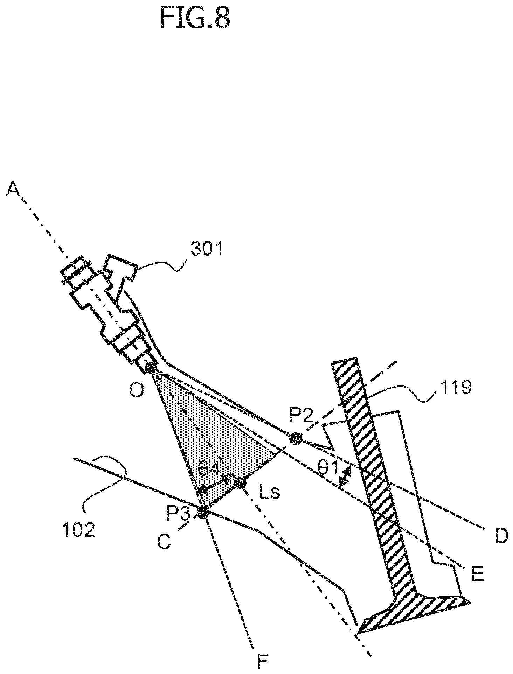

FIG. 8 illustrates the settings of axis line A and the spray shape based on first angle θ1.

The tip part of the injection holes on axis line A of fuel injection valve 301 is assumed to be an origin O.

In addition, when projected on a virtual plane including the central axis of intake port 102 and the shaft center of intake valve 119, a line that is perpendicular to axis line A at breakup location Ls is assumed to be a first virtual line C.

In addition, a contact point of an inner wall surface of intake port 102, the inner wall surface to which fuel injection valve 301 is attached, and first virtual line C is assumed to be a contact point P2, and a line connecting origin O and contact point P2 is assumed to be a second virtual line D.

In addition, a virtual line obtained by rotating second virtual line D toward main stream line B by first angle θ1 by using origin O as the center of rotation is assumed to be a third virtual line E.

Next, the spray shape of fuel injection valve 301 is set such that an outer edge of the main spray that extends from the injection holes of fuel injection valve 301 to breakup location Ls is located to match third virtual line E or is located inside third virtual line E toward main stream line B.

That is, spray angle θsp and axis line A of fuel injection valve 301 are set such that an outer edge of the main spray is located to match third virtual line E or is located inside third virtual line E toward main stream line B and a clearance corresponding to first angle θ1 or greater is created between the wall surface of the intake port 102 and the outer edge of the main spray.

Specifically, the contact point of an inner wall surface of intake port 102, the inner wall being opposite to the inner wall to which fuel injection valve 301 is attached, and first virtual line C is assumed to be a contact point P3, and the line connecting origin O and contact point P3 is assumed to be a fourth virtual line F.

In this case, spray angle θsp and axis line A are set such that an angle θ4 formed by fourth virtual line F and axis line A is equal to, or greater than, half of spray angle θsp and the angle formed by second virtual line D and axis line A is equal to, or greater than, a sum of the half of spray angle θsp and first angle θ1.

If spray angle θsp is too small, sufficiently uniform premixed gas may not be obtained, although the main spray can be prevented from coming into contact with the wall surface of intake port 102.

Thus, for example, breakup location Ls of fuel injection valve 301 and the attachment location of fuel injection valve 301 are set such that spray angle θsp is equal to, or greater than, its lower limit.

The lower limit of spray angle θsp may be set to 20 degrees, for example.

By setting axis line A and spray angle θsp as described above, it is possible to prevent the main spray from coming into contact with the wall surface of intake port 102 even when the main spray is deflected by the intake flow.

Thus, the uniformity of the premixed gas inside the intake port is improved, and therefore, for example, unburned fuel loss is decreased, knocking performance is improved, and combustion is improved.

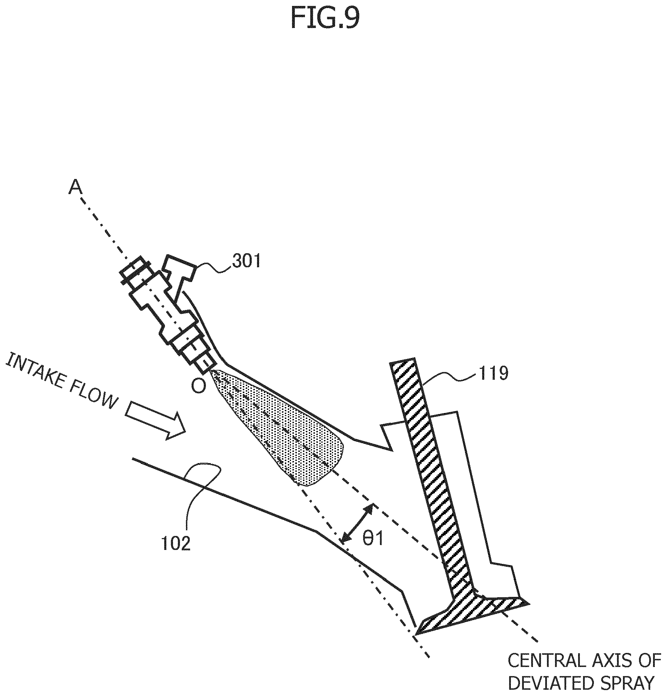

FIG. 9 illustrates the main spray that has been deflected by the intake flow when axis line A and spray angle θsp are set as described above.

The main spray has been deflected by the intake flow by first angle θ1. However, since the clearance corresponding to first angle θ1 is previously set between the outer edge of the main spray and the wall surface of intake port 102, even when the main spray is deflected by the intake flow by first angle θ1, the main spray is prevented from coming into contact with the wall surface of intake port 102.

If the pressure of the fuel supplied to fuel injection valve 301 is increased, the magnitude of velocity vector V1 increases, and as a result, first angle θ1, which is the extent to which the main spray is deflected by the intake flow, decreases.

If first angle θ1 is decreased, the clearance for preventing the main spray from coming into contact with the inner wall of intake port 102 due to deflection by the intake flow can be reduced. As a result, spray angle θsp can be relatively increased.

Thus, engine control apparatus 113 may include a function as a fuel pressure control unit that increases the pressure of the fuel supplied to fuel injection valve 301 as the intake flow inside intake port 102 increases, in other words, as the load and rotation velocity of internal combustion engine 101 increase. Under this condition in which engine control apparatus 113 performs the pressure control, spray angle θsp and axis line A can be set such that the main spray deflected by the intake flow inside intake port 102 does not come into contact with the wall surface of intake port 102 at breakup location Ls.

The following description will be made for a system setting in which the fuel pressure control prevents the main spray from coming into contact with the wall surface of intake port 102.

Internal combustion engine 101 includes a fuel pressure control apparatus constituted by engine control apparatus 113 and fuel pump 303, and this fuel pressure control apparatus is capable of varying the pressure of the fuel supplied to fuel injection valve 301.

Engine control apparatus 113 adjusts the pressure of the fuel supplied to fuel injection valve 301 to a target fuel pressure by controlling the discharge amount of fuel pump 303 based on comparison between fuel pressure FP measured by fuel pressure sensor 305 and the target fuel pressure.

In addition, axis line A and spray angle θsp of fuel injection valve 301 and the target value of fuel pressure FP are set such that the main spray does not come into contact with the wall surface of intake port 102 even when the main spray from fuel injection valve 301 is deflected by the intake flow. Engine control apparatus 113 controls the discharge amount of fuel pump 303 in accordance with the target value of fuel pressure FP.

That is, the shape of the spray from fuel injection valve 301 is set such that, at breakup location Ls, the clearance between an outer edge of the main spray and an inner wall of intake port 102, the outer edge and the inner wall being located in a direction in which the main spray is deflected by increase in intake flow velocity, is greater than the clearance between an outer edge of the main spray and an inner wall of the intake port 102, the outer edge and the inner wall being located in a direction opposite to the direction in which the spray is deflected.

In addition, engine control apparatus 113 serving as the fuel pressure control apparatus increases the pressure of the fuel supplied to fuel injection valve 301 as the intake flow velocity in intake port 102 increases (in other words, as the intake flow increases). That is, by increasing the magnitude of velocity vector V1 of the spray, the deflection of the spray due to the increase in intake velocity is reduced.

Hereinafter, the settings of the clearance and fuel pressure FP will be described in more detail.

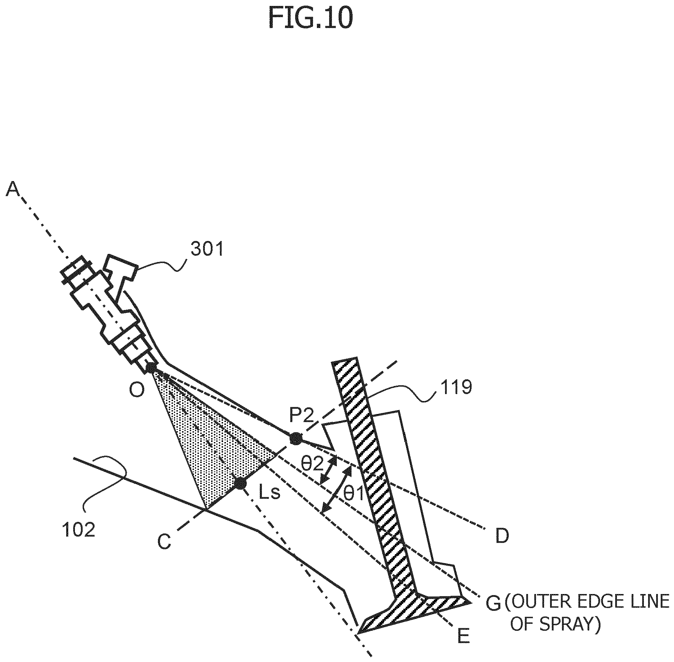

FIG. 10 illustrates a case in which a second angle θ2 formed by an outer edge line G of the main spray and second virtual line D is less than first angle θ1, which is the extent to which the main spray is deflected by the intake flow under a normal fuel pressure.

In this case, since second angle θ2 is the actual clearance, when second angle θ2 is less than first angle θ1 under the normal fuel pressure, if the main spray is deflected by the intake flow under the normal fuel pressure, the main spray comes into contact with the wall surface of intake port 102.

Thus, as will be described below, engine control apparatus 113 controls fuel pressure FP such that the main spray does not come into contact with the wall surface of intake port 102 even when second angle θ2 is less than first angle θ1 under the normal fuel pressure.

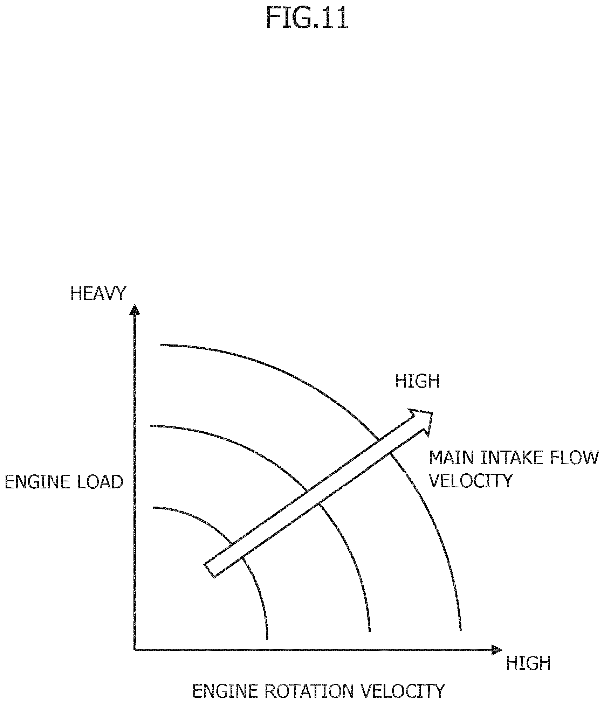

FIG. 11 illustrates the correlation among the main intake flow velocity, the engine load, and the engine rotation velocity. The main intake flow velocity when the operation conditions of internal combustion engine 101 represent a high load and a high rotation velocity is higher than that when the operation conditions of internal combustion engine 101 represent a low load and a low rotation velocity.

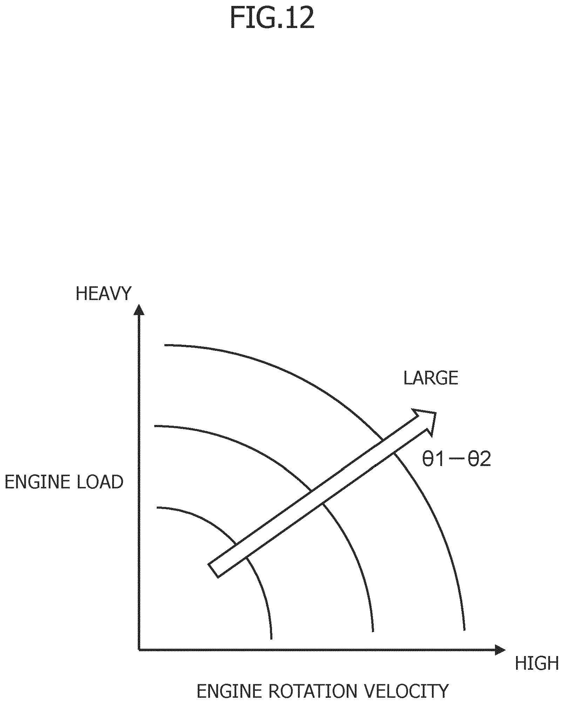

FIG. 12 illustrates the correlation among the difference between first angle θ1 and second angle θ2, that is, the insufficiency in clearance, the engine load, and the engine rotation velocity, when the pressure of the fuel supplied to fuel injection valve 301 is fixed to the normal fuel pressure, regardless of the operation conditions of internal combustion engine 101.

As described above, the main intake flow velocity when the operation conditions of internal combustion engine 101 represent a high load and a high rotation velocity is higher than that when the operation conditions of internal combustion engine 101 represent a low load and a low rotation velocity. As a result, velocity vector V2 of the intake flow increases, and first angle θ1 accordingly increases.

Thus, the difference between first angle θ1 and second angle θ2 when the operation conditions of internal combustion engine 101 represent a high load and a high rotation velocity is greater than that when the operation conditions of internal combustion engine 101 represent a low load and a low rotation velocity.

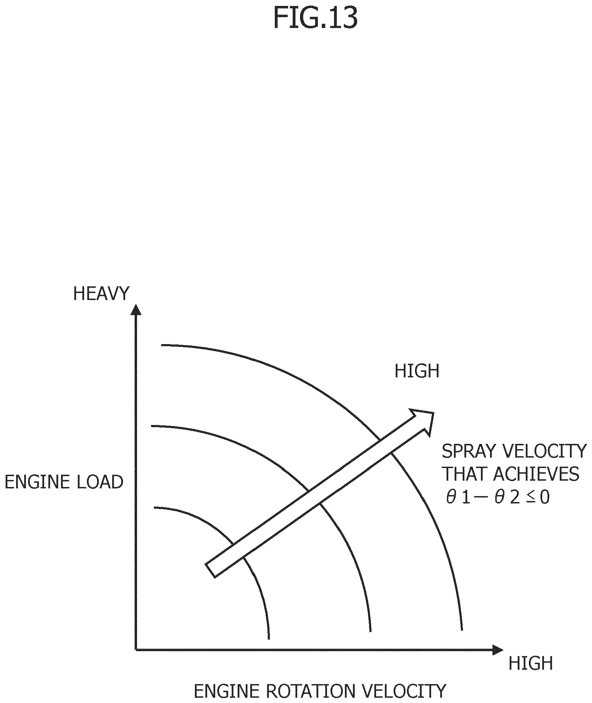

FIG. 13 illustrates the correlation among the spray velocity that achieves second angle θ2 ≥ first angle θ1, the engine load, and the engine rotation velocity.

The spray velocity that achieves second angle θ2 ≥ first angle θ1 prevents the main spray from coming into contact with the wall surface of intake port 102 even when the main spray is deflected by the intake flow.

A higher spray velocity achieves a smaller first angle θ1 under the same main intake flow velocity.

Thus, by setting a higher spray velocity in the high-load and high-rotation velocity region, in which the difference between first angle θ1 and second angle θ2 is large, than that in the low-load and low rotation velocity region, in which first angle θ1 and second angle θ2 is small, second angle θ2 can be made equal to, or greater than, first angle θ1.

That is, by setting a higher spray velocity when the operation conditions of internal combustion engine 101 represent a high load and a high rotation velocity than that when the operation conditions of internal combustion engine 101 represent a low load and a low rotation velocity, the extent to which the main spray is deflected by the intake flow is reduced, and as a result, the main spray can be prevented from coming into contact with the wall surface of intake port 102.

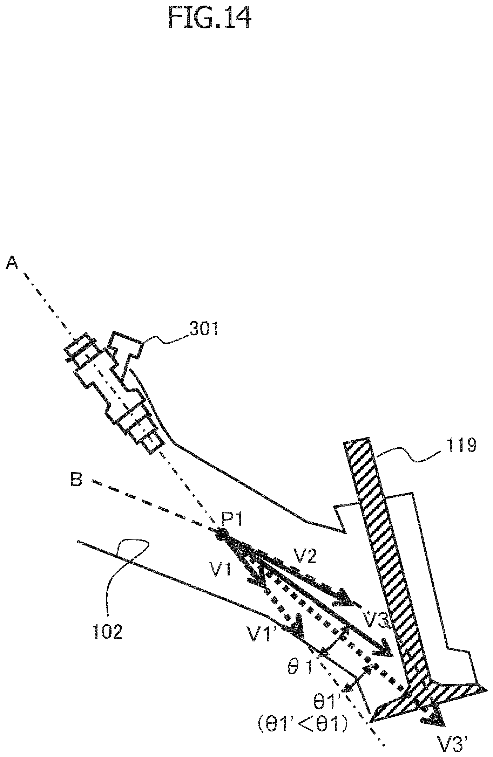

FIG. 14 illustrates the difference in spray velocity, more specifically, the change in first angle θ1 caused by the difference in spray velocity vector V1.

The magnitude of a velocity vector V 1' is set to be greater than that of velocity vector V1. That is, velocity vector V1' is a spray velocity higher than velocity vector V1.

Velocity vector V3, which is a resultant vector of intake velocity vector V2 and spray velocity vector V1, and a velocity vector V3', which is a resultant vector of intake velocity vector V2 and spray velocity vector V 1', are calculated. In addition, first angle θ1 formed by velocity vector V1 and velocity vector V3 and a first angle θ1' formed by velocity vector V1' and velocity vector V3' are calculated.

In this case, first angle θ1 > first angle θ1'. Thus, it is seen that first angle θ1, which is the extent to which the main spray is deflected by the intake flow, is decreased by increasing the spray velocity.

Thus, under the operation condition in which second angle θ2 is less than first angle θ1, second angle θ2 ≥ first angle θ1 can be satisfied by increasing the spray velocity and decreasing first angle θ1.

If this condition, which is second angle θ2 ≥ first angle θ1, is satisfied, even when the main spray is deflected by the intake flow, the main spray can be prevented from coming into contact with the wall surface of intake port 102.

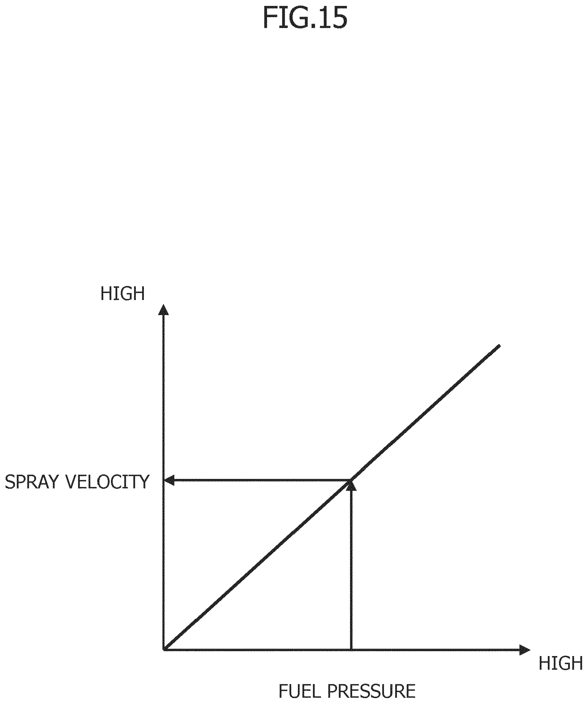

FIG. 15 illustrates the correlation between the pressure of the fuel supplied to fuel injection valve 301 and the spray velocity.

The spray velocity increases as the pressure of the fuel supplied to fuel injection valve 301 increases.

To satisfy the condition, which is second angle θ2 ≥ first angle θ1, it is necessary to set the spray velocity when the operation conditions of internal combustion engine 101 represent a high load and a high rotation velocity to be higher than that when the operation conditions of internal combustion engine 101 represent a low load and a low rotation velocity (see FIG. 13).

Engine control apparatus 113 increases the pressure of the fuel supplied to fuel injection valve 301 based on the increase in intake flow inside intake port 102, in other words, the increase in load and rotation velocity of internal combustion engine 101.

That is, when the pressure of the fuel supplied to fuel injection valve 301 is a normal pressure and when first angle θ1 is greater than second angle θ2, by setting the pressure of the fuel supplied to fuel injection valve 301 to be higher than the normal pressure in a high-rotation and high-load region of internal combustion engine 101, engine control apparatus 113 sets first angle θ1 to be equal to, or less than, second angle θ2.

As described above, engine control apparatus 113 increases the pressure of the fuel supplied to fuel injection valve 301 to be higher than a normal pressure as the intake flow velocity increases. In this way, although the spray angle and the spray axis line are set such that the spray deflected by the intake flow comes into contact with the wall surface of intake port 102 under normal pressure, the main spray can be prevented from coming into contact with the wall surface of intake port 102.

Thus, a uniform premixed gas of sprayed fuel and air inside the intake port can be obtained, and advantageous effects such as decrease in unburned fuel loss and improvement in knocking performance can be obtained.

The individual technical concepts described in the above example can be appropriately combined and used as long as there is no conflict.

In addition, although the present invention has thus been described in detail with reference to a preferable example, it will be apparent to those skilled in the art that various types of modification are possible, based on the basic technical concepts and teachings of the present invention.

For example, a Siamese port that branches into two parts from the middle part thereof may be used as intake port 102.

If intake port 102 is a Siamese port, the fuel injection system may be structured such that each of the individual intake ports after the branch point is provided with fuel injection valve 301. Alternatively, the fuel injection system may be constructed to include single fuel injection valve 301 that sprays in two directions toward the two intake ports.

In addition, the spray end timing of fuel injection valve 301 may be set at a timing before the intake top dead center, preferably before the intake flow toward the inside of the cylinder is generated. In this way, after a spray of fuel injected from fuel injection valve 301 is widely spread inside intake port 102 and a premixed gas of sprayed fuel and air is made uniform, the premixed gas can be drawn into the cylinder.

The sectional shape of the spray of fuel from fuel injection valve 301 may be appropriately set based on, for example, the sectional shape of intake port 102. Examples of the sectional shape include a circular shape and an oval shape.

In addition, the fuel pressure control is not limited to controlling the amount of fuel discharged by fuel pump 303. For example, the amount of fuel that is returned from fuel pipe 304 to fuel tank 302 may be controlled.

In addition, in the fuel pressure control, the target fuel pressure may be changed based on not only the engine load and the engine rotation velocity, but also on a condition relating to the engine temperature such as the cooling water temperature.

### REFERENCE SYMBOL LIST

- 101: internal combustion engine
- 102: intake port
- 113: engine control apparatus (fuel pressure control apparatus)
- 119: intake valve
- 300: fuel supply apparatus
- 301: fuel injection valve
- 303: fuel pump (fuel pressure control apparatus)

## Claims

1. An internal combustion engine comprising:
a fuel injection valve that sprays fuel to an intake port located upstream of an intake valve;
wherein a breakup location of spray from the fuel injection valve is set upstream of the intake valve, and
wherein a spray angle and a spray axis line of the fuel injection valve are set such that the spray deflected by an intake flow inside the intake port does not come into contact with a wall surface of the intake port at the breakup location.

2. The internal combustion engine according to claim 1, wherein the spray angle and the spray axis line of the fuel injection valve are set such that, between a main spray that extends from an injection hole of the fuel injection valve to the breakup location and a wall surface of the intake port, the wall being located in a direction in which the main spray is deflected by the intake flow inside the intake port, a clearance based on an extent to which the main spray is deflected by the intake flow inside the intake port is created.

3. The internal combustion engine according to claim 1, comprising a fuel pressure control apparatus that increases pressure of fuel supplied to the fuel injection valve based on increase in intake flow inside the intake port,
wherein, under a condition in which the fuel pressure control apparatus is capable of varying the pressure of the fuel, the spray angle and the spray axis line are set such that the spray deflected by the intake flow inside the intake port does not come into contact with the wall surface of the intake port at the breakup location.

4. The internal combustion engine according to claim 1, comprising a fuel pressure control apparatus capable of varying pressure of fuel supplied to the fuel injection valve,
wherein a shape of the spray from the fuel injection valve is set such that, at the breakup location, a clearance between an outer edge of the spray and an inner wall surface of the intake port, the outer edge and the inner wall being located in a direction in which the spray is deflected by increase in intake flow velocity, is greater than a clearance between an outer edge of the spray and an inner wall surface of the intake port, the outer edge and the inner wall being located in a direction opposite to the direction in which the spray is deflected, and
wherein the fuel pressure control apparatus reduces the deflection of the spray due to the increase in intake flow velocity by increasing the pressure of the fuel supplied to the fuel injection valve as the velocity of the intake flow inside the intake port increases.

5. The internal combustion engine according to claim 1,
wherein a tip part of an injection hole on an axis line A of the fuel injection valve is assumed to be an origin O,
wherein a velocity vector of the spray at an intersection point P1 of a main stream line B of the intake flow flowing inside the intake port and the axis line A is assumed to be V1, a velocity vector of the intake flow at the intersection point P1 in a high-rotation and high-load region of the internal combustion engine is assumed to be V2, and a resultant vector of the velocity vector V1 and the velocity vector V2 is assumed to be a velocity vector V3,
wherein an angle formed by the velocity vector V1 and the velocity vector V3 is assumed to be a first angle θ1,
wherein, when projected on a virtual plane including a central axis of the intake port and a shaft center of the intake valve, a line that is perpendicular to the axis line A at the breakup location is assumed to be a first virtual line C, a contact point of an inner wall surface of the intake port, the inner wall surface to which the fuel injection valve is attached, and the first virtual line C is assumed to be a contact point P2, a line connecting the origin O and the contact point P2 is assumed to be a second virtual line D, and a virtual line obtained by rotating the second virtual line D toward the main stream line B by the first angle θ1 by using the origin O as a center of rotation is assumed to be a third virtual line E, and
wherein a spray shape of the fuel injection valve is set such that an outer edge of a main spray that extends from the injection hole of the fuel injection valve to the breakup location is located to match the third virtual line E or is located inside the third virtual line E toward the main stream line B.

6. The internal combustion engine according to claim 1, comprising a fuel pressure control apparatus capable of varying pressure of fuel supplied to the fuel injection valve,
wherein a tip part of an injection hole on an axis line A of the fuel injection valve is assumed to be an origin O,
wherein a velocity vector of the spray at an intersection point P1 of a main stream line B of the intake flow flowing inside the intake port and the axis line A is assumed to be V1, a velocity vector of the intake flow at the intersection point P1 in a high-rotation and high-load region of the internal combustion engine is assumed to be V2, and a resultant vector of the velocity vector V1 and the velocity vector V2 is assumed to be a velocity vector V3,
wherein an angle formed by the velocity vector V1 and the velocity vector V3 is assumed to be a first angle θ1,
wherein, when projected on a virtual plane including a central axis of the intake port and a shaft center of the intake valve, a line that is perpendicular to the axis line A at the breakup location is assumed to be a first virtual line C, a contact point of an inner wall surface of the intake port, the inner wall surface to which the fuel injection valve is attached, and the first virtual line C is assumed to be a contact point P2, a line connecting the origin O and the contact point P2 is assumed to be a second virtual line D, and an angle formed by an outer edge of the spray and the second virtual line D is assumed to be a second angle θ2 when a spray shape of the fuel injection valve is set, and
wherein the first angle θ1when the pressure of the fuel supplied to the fuel injection valve is a normal pressure is greater than the second angle θ2, and in a high-rotation and high-load region of the internal combustion engine, the first angle θ1 is set to be equal to, or less than, the second angle θ2 by setting the pressure of the fuel supplied to the fuel injection valve to be greater than the normal pressure.

7. The internal combustion engine according to claim 1,
wherein a tip part of an injection hole on an axis line A of the fuel injection valve is assumed to be an origin O,
wherein a velocity vector of the spray at an intersection point P1 of a main stream line B of the intake flow flowing inside the intake port and the axis line A is assumed to be V1, a velocity vector of the intake flow at the intersection point P1 in a high-rotation and high-load region of the internal combustion engine is assumed to be V2, and a resultant vector of the velocity vector V1 and the velocity vector V2 is assumed to be a velocity vector V3,
wherein an angle formed by the velocity vector V1 and the velocity vector V3 is assumed to be a first angle θ1,
wherein, when projected on a virtual plane including a central axis of the intake port and a shaft center of the intake valve, a line that is perpendicular to the axis line A at the breakup location is assumed to be a virtual line C, a contact point of an inner wall surface of the intake port, the inner wall surface to which the fuel injection valve is attached, and the virtual line C is assumed to be a contact point P2, a contact point of an inner wall surface of the intake port, the inner wall surface being opposite to the inner wall surface to which the fuel injection valve is attached, and the virtual line C is assumed to be a contact point P3, a line connecting the origin O and the contact point P2 is assumed to be a virtual line D, a line connecting the origin O and the contact point P3 is assumed to be a virtual line F, and the spray angle of the fuel injection valve is assumed to be θsp,
wherein the spray angle θsp and the axis line A are set such that an angle formed by the virtual line F and the axis line A is equal to, or greater than, half of the spray angle θsp, and an angle formed by the virtual line D and the axis line A is equal to, or greater than, a sum of half of the spray angle θsp and the first angle θ1.

8. The internal combustion engine according to claim 1, wherein the breakup location is defined by a distance from an injection hole of the fuel injection valve when a velocity of the spray of fuel injected by the fuel injection valve downward in a direction of gravitational force reaches 8 m/s or less.

9. The internal combustion engine according to claim 1, wherein a lower limit of an angle of a main spray injected by the fuel injection valve, the main spray extending from an injection hole to the breakup location, is 20 degrees.

10. The internal combustion engine according to claim 1, wherein the fuel injection valve includes a plurality of combinations of an injection hole and a swirl generation chamber that is located upstream of the injection hole and that generates a swirl in the fuel.

11. A fuel injection valve for spraying fuel to an intake port located upstream of an intake valve of an internal combustion engine, wherein a breakup location of the spray is set upstream of the intake valve, and a shape of a main spray that extends from an injection hole of the fuel injection valve to the breakup location is set such that a clearance that prevents the main spray from coming into contact with an inner wall of the intake port due to deflection by an intake flow is created between an outer edge of the main spray and the inner wall of the intake port.

12. The fuel injection valve according to claim 11, wherein the breakup location is defined by a distance from the injection hole of the fuel injection valve when a velocity of the spray of fuel injected by the fuel injection valve downward in a direction of gravitational force reaches 8 m/s or less.

13. The fuel injection valve according to claim 11, wherein a lower limit of a spray angle of the main spray is 20 degrees.

14. The fuel injection valve according to claim 11, comprising a plurality of combinations of the injection hole and a swirl generation chamber that is located upstream of the injection hole and that generates a swirl in the fuel.
